# EUROPEAN PATENT SPECIFICATION

(11) **EP 2 339 388 B1**
(45) Date of publication and mention of the grant of the patent: **18.06.2014**
(21) Application number: 10015746.0
(22) Date of filing: 16.12.2010
(51) Int. Cl.: G02B 21/26, G02B 21/36, G02B 21/24

(54) **Microscope controller and microscope system provided with microscope controller**
Mikroskopsteuerung und Mikroskopsystem mit der Mikroskopsteuerung
Contrôleur de microscope et système de microscope doté du contrôleur de microscope

(30) Priority: 22.12.2009 JP 2009291469
(43) Date of publication of application: 29.06.2011
(73) Proprietor: OLYMPUS CORPORATION, Shibuya-ku Tokyo 151-0072 (JP)
(72) Inventor: Sukekawa, Minoru, Shibuya-ku Tokyo 151-0072 (JP)
(74) Representative: Schicker, Silvia

(56) References cited:
- EP-A2- 2 275 852
- JP-A- 2001 059 940
- US-A1- 2005 041 282

## Description

### Technical Field

The present invention relates to a microscope controller for performing an operation for control of each driving of a plurality of electric units included in a microscope system, and more specifically to a microscope controller whose operation is performed through a touch panel.

### Background Art

Recently, there are not a few microscope systems including microscope devices whose units are electrically driven, and there is an increasing number of units to be operated. That is, it has become necessary to perform various types of control on each unit of a microscope system.

Under the circumstances, for example, Patent Document 1 (International Publication Pamphlet No. WO 96/18924) proposes a microscope system for performing a drive instruction of each electric unit by an operation of a touch panel.

In addition, for example, Patent Document 2 (Japanese Laid-open Patent Publication No. 2008-234372) proposes an operating device for easily performing an operation by performing it while touching operating means arranged adjacent to display means when the contents displayed on the display means of mobile equipment are display-controlled.

When the operation of each unit of a microscope system is performed by the operation of input means such as a touch panel, there occurs a problem depending on the type of a unit to be operated.

For example, when an objective and an optical filter are switched, a user moves his or her sight from a microscope device to a touch panel, and presses a button displayed on the touch panel, thereby switching to a desired state. However, for example, when focusing is performed or a stage is moved, the user operates a touch panel while watching a sample image through an eyepiece or a monitor of a microscope device so that a desired observation state (focusing and target searching) can be reached. That is, a user has to repeat trial and error without watching a touch panel to perform a delicate adjusting operation.

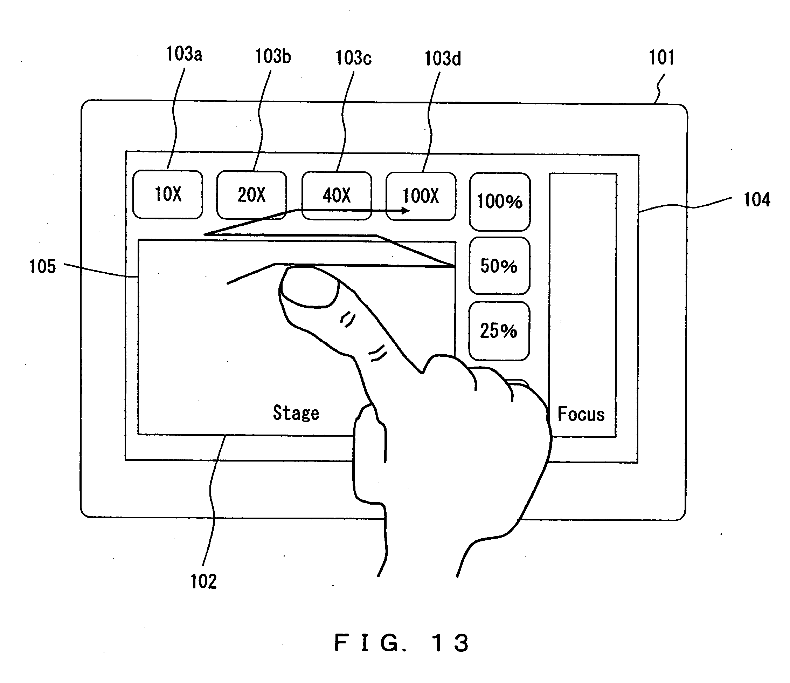

FIG. 13 is an explanatory view of an example of an erroneous operation which can occur in this case.

A device 101 having a touch panel illustrated in FIG. 13 has a stage operation area 102 and an objective selection area 103 (103a, 103b, 103c, and 103d) etc. set on a display area 104 of a touch panel. In the device 101, for example, a user moves the finger while touching the stage operation area 102, thereby moving the stage in a corresponding direction (X-axis direction and/or Y-axis direction). In addition, for example, when the user touches any objective selection area 103 with the finger, a corresponding objective can be inserted into an optical path.

When the user performs an operation of moving a stage using the device 101, the operation is performed without visual confirmation of the state of the device 101 (display area 104 of the touch panel) as described above. In this case, for example, although the user repeats performing the operation with the finger on the stage operation area 102, there is the possibility that, as illustrated by a locus 105 in FIG. 13, the finger gradually deviates from the stage operation area 102, finally touches the objective selection area 103, and performs an erroneous operation of an objective. Thus, in the operation without visual confirmation, although the user intends to perform an operation on the stage operation area 102, an area other than the stage operation area 102 can be erroneously operated.

Patent Document 1 refers to changing an attribute set on the switch configured in a touch panel in a proposed microscope system, and making an adjustment to drive an electric unit corresponding to the changed attribute. However, it does not refer to focusing or moving a stage. That is, the above-mentioned erroneous operation is not considered.

On the other hand, the operating device proposed by Patent Document 2 has an operating means (touch sensor) adjacent to the periphery of display means so that the operation can be comprehensible. However, although the configuration is applied to a microscope system, for example, the movement of the stage is not performed only in one direction, but it is necessary to flexibly operate it also in the X-axis direction and the Y-axis direction. Therefore, it is not sufficient to provide only the operating means arranged adjacent at the periphery of the display means. Considering various operations such as focusing, zooming, etc. in addition to the movement of the stage, there is a space around the periphery of the display means. Accordingly, there is no flexibility in arrangement of operating means.

Document JP 2001 059940 A discloses a microscope controller in which an operation for control of each driving of a plurality of electric units included in a microscope system is performed, comprising a touch panel unit receiving input by an external physical contact and having a display function, a control unit setting in a display area of the touch panel unit a plurality of operation areas including at least a first operation area as a plurality of operation areas in which the operation for control of each driving of the plurality of electric units is performed, and generating a control directive signal for control of the driving of a corresponding electric unit when input by an external physical contact for one or more of the plurality of operation areas is detected, and a communication control unit transmitting the control directive signal generated by the control unit to an external device for controlling the driving of the corresponding electric unit, wherein the control unit comprises a first recognition unit recognizing continuous input by an external physical contact to the first operation area. In this context, also documents US 2005/041282 A1 and EP 2 275 852 A2 should be mentioned which show similar microscope controllers.

### Disclosure of Invention

The present invention has been developed to solve the above-mentioned problems and aims at providing a microscope controller and a microscope system having the controller which prevent an erroneous operation from being performed when the operation of a touch panel is performed in an operation without visual confirmation, and improve the operability with a flexible arrangement of an operation area.

To attain the above-mentioned objective, the device according to an aspect of the present invention is a microscope controller according to claim 1.

### Brief Description of Drawings

- FIG. 1: is an example of the configuration of the microscope system including the microscope controller according to the embodiment 1;
- FIG. 2: is an example of the configuration of the inside of the microscope controller according to the embodiment 1;
- FIG. 3: is an example of a plurality of operation areas set in the display area of the touch panel in the embodiment 1;
- FIG. 4A: is a first view illustrating an example of an operation performed by a user on an operation area;
- FIG. 4B: is a second view illustrating an example of an operation performed by a user on an operation area;
- FIG. 5: is an example of the operation in which the stage is moved in the X-axis direction and/or the Y-axis direction in the embodiment 1;
- FIG. 6: is an example of the operation in which the stage is moved in the Z-axis direction in the embodiment 1;
- FIG. 7: is an example in which an operation area in which the operation of controlling the driving of the zoom mechanism in the embodiment 1;
- FIG. 8: is an example of a variation of a plurality of operation areas set in the display area of the touch panel in the embodiment 1;
- FIG. 9: is an example of a variation of a plurality of operation areas set in the display area of the touch panel in the embodiment 2;
- FIG. 10: is an example of the operation in which the stage is moved in the X-axis direction and/or the Y-axis direction in the embodiment 2;
- FIG. 11: is an example of the operation in which the stage is moved in the Z-axis direction in the embodiment 2;
- FIG. 12: is an example of the operation in which the stage is moved in the X-axis direction and/or the Y-axis direction in the embodiment 3; and
- FIG. 13: is an example of the operation in which the stage is moved in the X-axis direction and/or the Y-axis direction in the prior art.

### Best Mode for Carrying Out the Invention

The embodiments of the present invention are described below with reference to the attached drawings.

### [Embodiment 1]

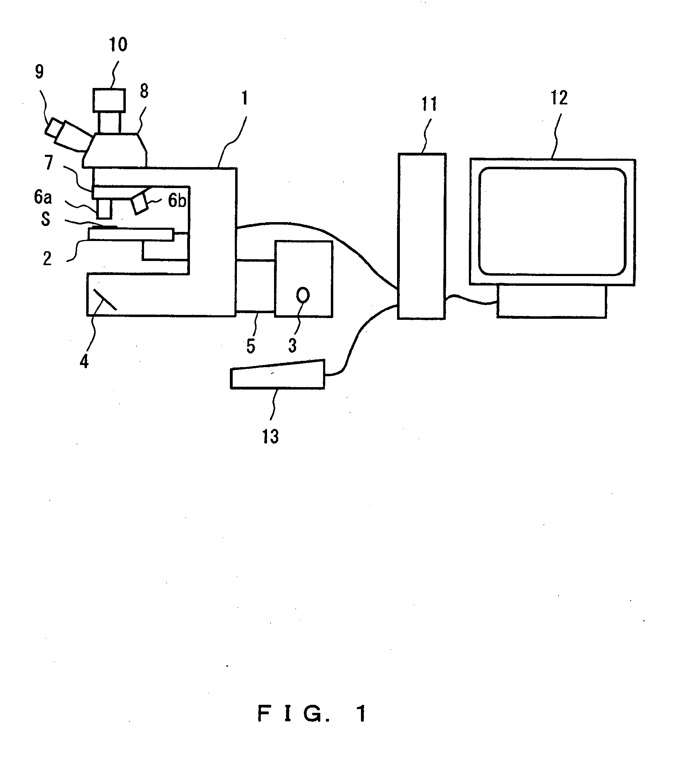

FIG. 1 is an example of the configuration of the microscope system including the microscope controller according to the embodiment 1 of the present invention.

In the microscope system illustrated in FIG. 1, a sample S to be observed is placed on a stage 2 supported by a microscope body (microscope device body) 1. The stage 2 is supported by an electric drive mechanism (electric unit) not illustrated in FIG. 1 so that the stage can be moved in two directions parallel to the microscope body 1 (right and left, and perpendicular with respect to the sheet of FIG. 1, that is, hereinafter referred to as the "X-axis direction" and the "Y-axis direction"). The stage 2 is also supported to be moved up and down with respect to the microscope body 1 (up and down with respect to the sheet of FIG. 1, that is, hereinafter referred to as the "Z-axis direction") by the electric drive mechanism (electric unit) not illustrated in FIG. 1. A lamp 3 is to illuminate the sample S, and the illumination light is led to the sample S by a mirror 4 arranged in the microscope body 1. An attenuation unit 5 for inserting and removing each of a plurality of attenuation filters with respect to the optical path by the electric drive mechanism (electric unit) not illustrated in FIG. 1 is arranged between the lamp 3 and the microscope body 1. Thus, the attenuation filter to be inserted into the optical path can be appropriately switched. Above the sample S, a plurality of objectives 6 (6a, 6b,...) for scaling up and observing the sample S are supported by a revolver 7. the revolver 7 has an electric drive mechanism (electric unit) for switching the objectives 6 to be inserted into the optical path but not illustrated in FIG. 1. Thus, the objectives 6 to be inserted into the optical path can be appropriately switched, and the magnification can be appropriately changed. Above the objective 6, an observation barrel 8 is held with respect to the microscope body 1. An eyepiece 9 is attached to the observation barrel 8, and a camera 10 is attached further above the observation barrel 8. The observation barrel 8 is configured so that the optical observation path can be lead to the eyepiece 9 or the camera 10.

On the other hand, a personal computer 11 for transmitting and receiving a signal for drive of each of the electric drive mechanisms and a signal of the camera 10 is connected to the microscope body 1. A monitor 12 is connected to the personal computer 11. A microscope controller 13 having a touch panel for performing the operation for control of the driving of each electric drive mechanism is connected to the personal computer 11.

In the microscope system having the above-mentioned configuration, the sample S illuminated by the lamp 3 is scaled up by the objective 6, and the user can observe a scale-up image of the sample S through the eyepiece 9 attached to the observation barrel 8. In addition, the observation image of the sample S can be projected on the monitor 12 by leading the optical observation path to the camera 10 by the optical path switch mechanism in the observation barrel 8 but not illustrated in FIG. 1. Furthermore, the user can perform an operation on the microscope controller 13 to control the driving of each of the above-mentioned electric drive mechanisms through the personal computer 11 as described later in detail.

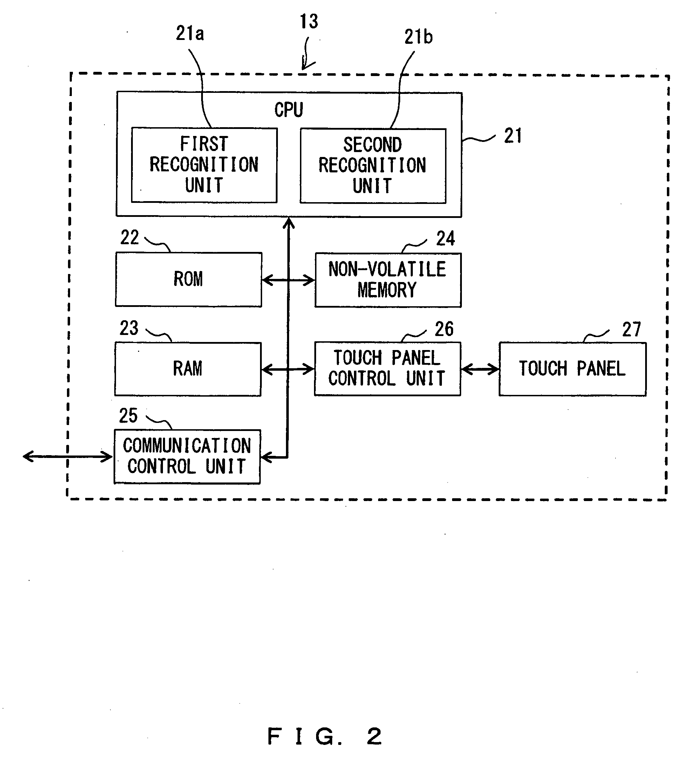

FIG. 2 is an example of the configuration of the inside of the microscope controller 13.

As illustrated in FIG. 2, the microscope controller 13 includes a CPU (Central Processing Unit) 21 as an example of a control unit, ROM (Read Only Memory) 22, RAM (Random Access Memory) 23, non-volatile memory 24, a communication control unit 25, a touch panel control unit 26, and a touch panel 27 as an example of a touch panel unit. Among the components, various data can be communicated through a bus under the management of the CPU 21.

The CPU 21 is to control the entire microscope controller 13. The ROM 22 stores in advance a control program for control of the microscope controller 13. The RAM 23 is used as a working storage area when the CPU 21 executes the control program, and temporarily stores various data.

The non-volatile memory 24 stores in advance the information for setting a plurality of operation areas in the display area of the touch panel 27 (hereinafter referred to simply as "setting information") in which the operation for control of the driving of each of the above-mentioned electric drive mechanisms is performed. The setting information includes the information for setting, for example, an operation area in which an operation for control of the driving of the electric drive mechanism for moving the stage 2 in the X-axis direction and/or the Y-axis direction is performed, an operation area in which an operation for control of the driving of the electric drive mechanism for moving the stage 2 in the Z-axis direction is performed, an operation area in which an operation for control of the driving of the electric drive mechanism for switching an attenuation filter to be inserted into the optical path is performed, an operation area in which an operation for control of the driving of the electric drive mechanism for switching the objective 6 to be inserted into the optical path is performed, etc.

The communication control unit 25 manages the data communication (for example, serial communication) performed with the personal computer 11, and transmits to the personal computer 11 the control information etc. for control of the driving of each electric drive mechanism.

The touch panel 27 receives input by an external physical contact, and has a display function. That is, it has the function of a display device and the function of an operator for operating input. The touch panel 27 can be a touch panel of a filter resistance system, an electrostatic capacity system, an infrared system, an ultrasonic system, etc., and is not limited to the types of systems. In addition, the touch panel control unit 26 detects the coordinates (X coordinate and Y coordinate) of the position input by the user on the touch panel 27, and transmits the detected coordinate information to the CPU 21.

In the present embodiment, the following processes are performed in the microscope controller 13 with the above-mentioned configuration. The CPU 21 performs the process in which a plurality of operation areas including at least a first operation area and a second operation area are set as a plurality of operation areas in which the operation for control of the driving of each of a plurality of electric drive mechanisms in the display area of the touch panel 27 is performed. In addition, the CPU 21 also performs the process in which a control directive signal for control of the driving of a corresponding electric drive mechanism is generated when input by an external physical contact to one or more of a plurality of operation areas is detected. In addition, the communication control unit 25 performs the process in which control directive signal generated by the CPU 21 is transmitted to the personal computer 11 for controlling the driving of a corresponding electric drive mechanism. The CPU 21 further includes a first recognition unit 21a and a second recognition unit 21b realized by hardware or software. Then, the first recognition unit 21a performs the process in which continuous input by an external physical contact to the first operation area is recognized. The second recognition unit 21b performs the process in which only when the first recognition unit 21a recognizes the continuous input performed to the first operation area, and when external input by an external physical contact to the second operation area is continuously performed, a difference between the start-of-input position at which the input is first detected and the end-of-input position at which the input is last detected is recognized. The CPU 21 performs the process in which a control directive signal for control of the driving of a corresponding electric drive mechanism is generated based on the difference when the difference is recognized by the second recognition unit 21b.

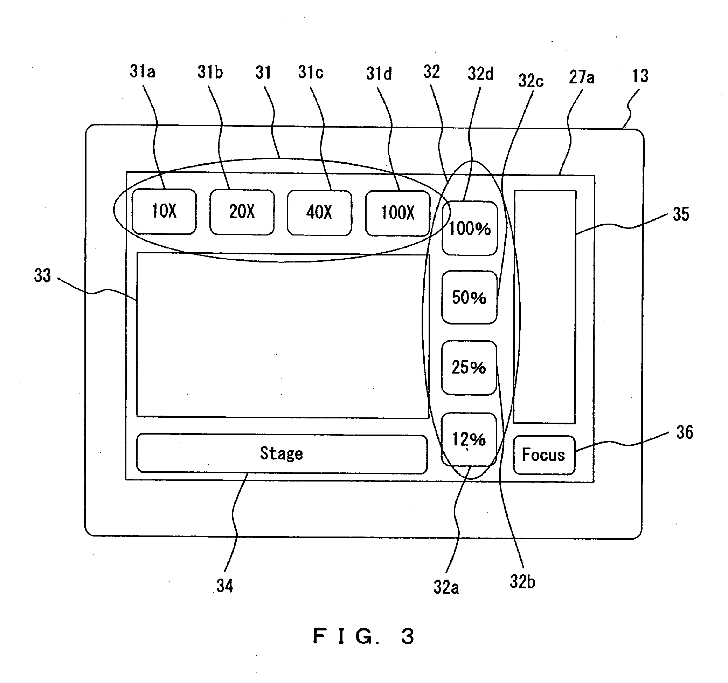

FIG. 3 is an example of a plurality of operation areas set in the display area of the touch panel 27 also functioning as a display screen of the microscope controller 13. The plurality of operation areas in FIG. 3 are set by the CPU 21 according to the setting information stored in the non-volatile memory 24.

As illustrated in FIG. 3, a plurality of operation areas are set in a display area 27a of the touch panel 27. Operation areas 31 (31a, 31b, 31c, and 31d) not to be understood as first operation area or second operation area in the sense of claim 1 are to select and switch the objective 6 to be inserted into the optical path, and the operation areas 31a, 31b, 31c, and 31d respectively correspond to the 10x, 20x, 40x, and 100x objectives 6. Operation areas 32 (32a, 32b, 32c, and 32d) not to be understood as first operation area or second operation area in the sense of claim 1 are to select and switch the attenuation filter to be inserted into the optical path, and the operation areas 32a, 32b, 32c, and 32d respectively correspond to 12%, 25%, 50%, and 100% attenuation filters. The operation area 33 is to move the stage 2 in the X-axis direction and/or the Y-axis direction. An operation area 34 is to effectuate the operation area 33. An operation area 35 is to move the stage 2 in the Z-axis direction, and also is to perform focusing on the sample S. An operation area 36 is to effectuate the operation area 35. In the present embodiment, when the above-mentioned first operation area is the operation area 34, the second operation area is the operation area 33. When the first operation area is the operation area 36, the second operation area is the operation area 35.

A user can control the driving of each electric drive mechanism by performing the operation on the plurality of operation areas set in a display area 27a of the touch panel 27.

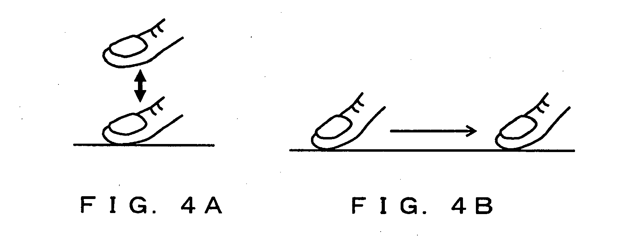

As an operation performed by a user on an operation area includes, for example, an operation as illustrated in FIG. 4. The operation illustrated in FIG. 4A is an operation of detaching a finger from the operation area after the finger contacts the operation area and does not move. The operation illustrated in FIG. 4B is a finger contacting an operation area and the finger detached from the operation area after moving with the finger contacting the operation area.

In the plurality of operation areas set in the display area 27a of the touch panel 27 illustrated in FIG. 3, if a user performs the operation of, for example, pressing any of the operation areas 31a, 31b, 31c, and 31d by the finger (the operation as illustrated in FIG. 4A), the objective 6 corresponding to the operation area 31 in which the operation has been performed is inserted into the optical path, and the magnification is changed. In this case, when the operation is performed in the operation area 31a corresponding to the 10x objective 6, the objective 6 inserted into the optical path is switched to the 10x objective 6. When the operation is performed in the remaining operation areas 31b, 31c, and 31d, the objective 6 is switched likewise. Thus, the user can observe the sample S in desired size.

Furthermore, for example, when the user performs an operation of pressing any of the operation areas 32a by the finger (operation as illustrated in FIG. 4A), the attenuation filter corresponding to the operation area 32 in which the operation has been performed is inserted into the optical path, and the intensity of the illumination light which illuminates the sample S is changed. In this case, if the operation is performed in the operation areas 32a, 32b, 32c, and 32d corresponding to a 12% attenuation filter, the attenuation filter inserted into the optical path is switched to a 12% attenuation filter. Likewise in the case in which the operation is performed in the remaining operation areas 32b, 32c, and 32d, the attenuation filter is switched. Thus, the user can observe the sample S with desired luminosity.

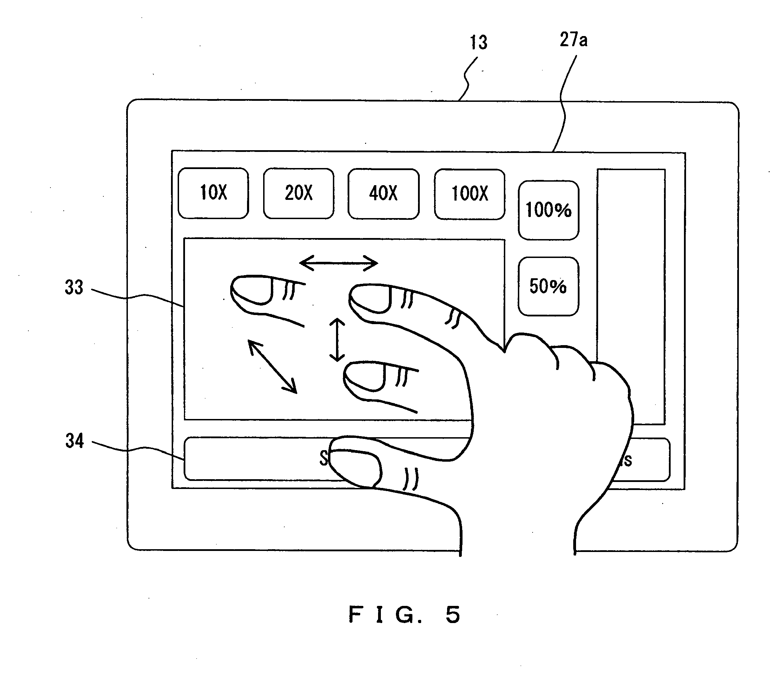

In addition, for example, as illustrated in FIG. 5, when a user performs an operation of tracing the operation area 33 with the forefinger (as illustrated in FIG. 4B) while continuing the operation with the thumb contacting the operation area 34, the stage 2 moves in the X-axis direction and/or the Y-axis direction depending on the operation of tracing the operation area 33 so far as the operation of contacting the operation area 34 continues. The operation area 33 is valid so far as the operation of contacting the operation area 34 continues. When one tracing operation is performed in the valid operation area 33, the stage 2 moves in the X-axis direction and/or the Y-axis direction for the corresponding amount depending on the difference between the start position and the end position of the tracing operation. Thus, the user can move the observation position of the sample S to a desired position. In addition, the user can perform the tracing operation with the forefinger in the operation area 33 while contacting the operation area 34 with the thumb to move the observation position to a desired position. Therefore, the tracing operation with the forefinger can be performed with the thumb fixed. Accordingly, although the tracing operation is repeatedly performed by an operation without visual confirmation, the tracing operation does not deviate from the operation area 33 unlike the conventional case in which the tracing operation is performed with a user's forefinger only (refer to FIG. 13), and there is no possibility of an erroneous operation. Therefore, the user can perform the tracing operation in the operation area 33 while watching through the eyepiece 9 or checking the monitor 12 when the observation position of the sample S is searched for.

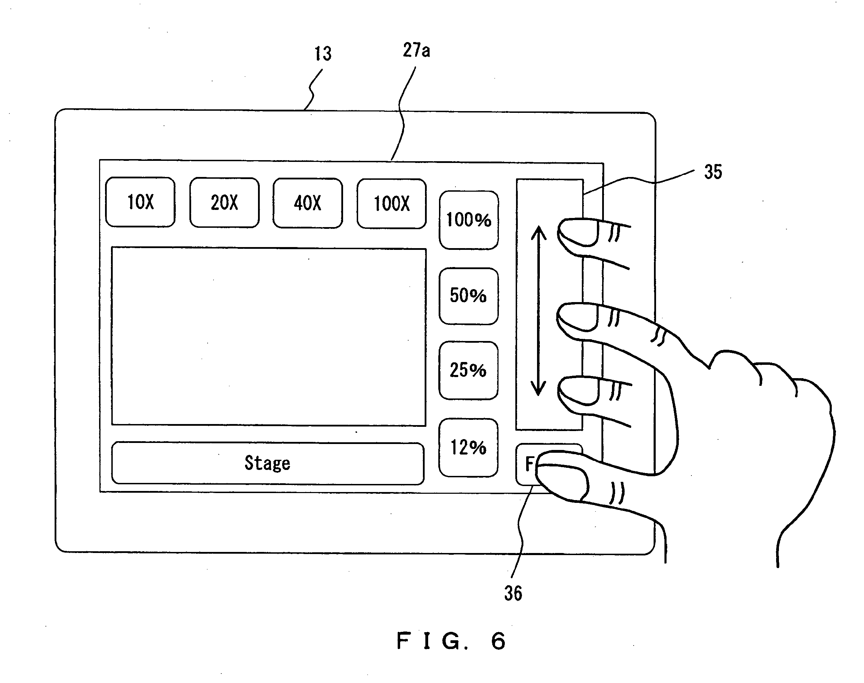

In addition, for example, when the user performs the tracing operation (as illustrated in FIG. 4B) with the forefinger in the operation area 35 while continuing the touching operation with the thumb in the operation area 36 as illustrated in FIG. 6, the stage 2 is moved in the Z-axis direction depending on the tracing operation in the operation area 35 so far as the touching operation in the operation area 36 continues. The operation area 35 is valid so far as the touching operation in the operation area 36 continues. When one tracing operation is performed in the valid operation area 35, the stage 2 is moved in the Z-axis direction by the corresponding amount based on the difference between the starting position and the ending position of the tracing operation. Thus, the user can perform focusing on the sample S and observe an image in focus. Since the user is to perform the tracing operation with the forefinger in the operation area 35 while touching the operation area 36 with the thumb when the focusing operation is performed, the tracing operation with the forefinger can be performed with the thumb fixed. Therefore, although the tracing operation is repeatedly performed by the operation without visual confirmation, the tracing operation does not deviate from the operation area 35 unlike when the conventional tracing operation is performed with the forefinger only, and there is no possibility of an erroneous operation. Accordingly, the user can perform the tracing operation in the operation area 35 through the eyepiece 9 or while checking the monitor 12 when the focusing on the sample S is performed.

As described above, according to the present embodiment, although the operation without visual confirmation is to be performed on the touch panel 27 in the case where an operation for searching for an observation position or performing focusing is to be performed, the tracing operation with the forefinger can be performed with the thumb fixed. Thus, the tracing operation does not deviate from a target operation area, or there is no possibility of an erroneous operation. In addition, since it is only necessary that the operation areas in which the above-mentioned operations can be performed are operation areas 33 and 34, and the operation areas 35 and 36, that is, it is only necessary to have one operation area and another operation area arranged closely to effectuate the operation area, the arrangement is flexible in the display area 27a of the touch panel 27. Therefore, when there is an increasing number of operation areas for similar operations, the arrangement can be easily made.

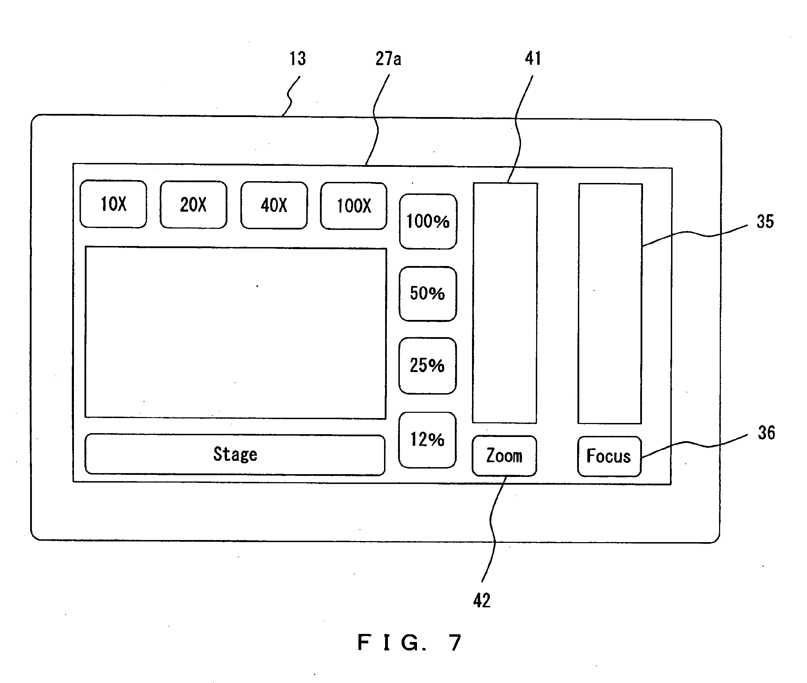

FIG. 7 is an example of an arrangement when there is an increasing number of operation areas.

The example illustrated in FIG. 7 is an example of adding operation areas 41 and 42 for control of the driving of a zoom mechanism when the zoom mechanism is further added to the microscope device included in the microscope system according to the present embodiment. In the present example, like the operations in the operation areas 35 and 36 performed during focusing, for example, when the user performs the tracing operation with the forefinger (as illustrated in FIG. 4B) in the operation area 41 while continuing the touching operation with the thumb in the operation area 42, the zoom mechanism drives depending on the tracing operation in the operation area 41 so far as the touching operation in the operation area 42 continues. The operation area 41 is effectuated so far as the touching operation in the operation area 42. Thus, an operation area can be optionally added while maintaining the operability regardless of the peripheral conditions of the display screen of the microscope controller 13.

In addition, in the present embodiment, a plurality of operation areas set in the display area 27a of the touch panel 27 can be varied as follows.

In this variation example, the first operation area further includes a plurality of operation areas. Then, when a control directive signal for control of the driving of a corresponding electric drive mechanism is generated based on the difference recognized by the second recognition unit 21b, the CPU 21 performs the process of generating a control directive signal having a different level for control of the driving of the electric drive mechanism depending on which of the plurality of operation areas in the first operation area the input recognized by the first recognition unit 21a is performed.

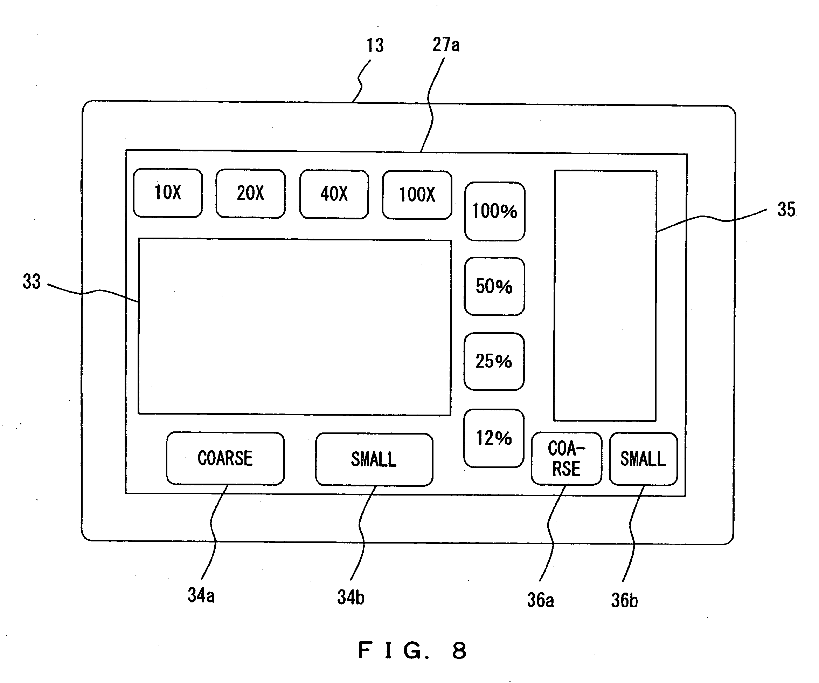

FIG. 8 is an example of the variation.

The example illustrated in FIG. 8 is selecting a coarse movement or a small movement in a method of moving the stage 2 when an operation of moving the stage 2 is performed by a user.

In the example in FIG. 8, operation areas 34a and 34b are provided as the operation area 34, and operation areas 36a and 36b are provided as the operation area 36. It can also be stated that the operation area 34 includes the operation areas 34a and 34b, and the operation area 36 includes the operation areas 36a and 36b. The operation areas 34a and 34b are areas for effectuating the operation area 33, and the operation area 34a is an area for a coarse movement of the stage 2, and the operation area 34b is an area for a small movement of the stage 2. Likewise, the operation areas 36a and 36b are areas for effectuating the operation area 35, the operation area 36a is an area for a coarse movement of the stage 2, and the operation area 36b is an area for a small movement of the stage 2.

For example, when the user performs the tracing operation with the forefinger in the operation area 33 (the operation as illustrated in FIG. 4B) while continuing the touching operation with the thumb in the operation area 34a, a coarse movement of the stage 2 is made in the X-axis direction and/or the Y-axis direction depending on the tracing operation in the operation area 33 so far as the touching operation continues in the operation area 34a. On the other hand, when the user performs the tracing operation with the forefinger in the operation area 33 (the operation as illustrated in FIG. 4B) while continuing the touching operation with the thumb in the operation area 34b, a small movement of the stage 2 is made in the X-axis direction and/or the Y-axis direction depending on the tracing operation in the operation area 33 so far as the touching operation continues in the operation area 34b.

In addition, for example, when the user performs the tracing operation with the forefinger in the operation area 35 (operation as illustrated in FIG. 4B) while continuing the touching operation with the thumb in the operation area 36a, a coarse movement of the stage 2 is made in the Z-axis direction depending on the tracing operation in the operation area 35 so far as the touching operation continues in the operation area 36a. On the other hand, when the user performs the tracing operation with the forefinger in the operation area 35 (as illustrated in FIG. 4B) while continuing the touching operation in the operation area 36b with the thumb, a small movement of the stage 2 is made in the Z-axis direction depending on the tracing operation in the operation area 35 so far as the touching operation continues in the operation area 36b.

Thus, by setting a plurality of operation areas illustrated in FIG. 8 in the display area 27a of the touch panel 27, the method of moving the stage 2 can be changed depending on the situation. Therefore, the operability can be improved, that is, the observation position of the sample S and the focusing can be finely adjusted.

In the present embodiment, there are two operation areas such as the operation areas 33 and 34, the operation areas 35 and 36, etc. one of which is an area for effectuating the other. In the present embodiment, in these two related operation areas, an operation area for effectuating another operation area is provided below the another operation area, but the positional relation is not limited to this example. For example, it is also possible to provide an operation area for effectuating another operation area above, to the left, or to the right of the another. Furthermore, it is also possible for a user to optionally set the positional relation. Thus, by changing the positional relation, the user can also use other fingers instead of the thumb for touching an operation area for effectuating another operation area described above with reference to FIGS. 5, 6, and other figures.

### [Embodiment 2]

The microscope system according to the embodiment 2 of the present invention is basically the same as the microscope system according to the embodiment 1 in configuration, but parts of the processes are different between them. Accordingly, in the descriptions of the present embodiment, the different parts of the processes are mainly explained below.

In the microscope system according to the present embodiment, the following process is performed in the microscope controller 13. The CPU 21 performs the process of setting a plurality of operation areas including at least a first operation area as the plurality of operation areas in which the operation for control of each driving of a plurality of electric drive mechanisms in the display area of the touch panel 27 is performed. The CPU 21 performs the process of generating a control directive signal for control of the driving of a corresponding electric drive mechanism when the input by an external physical contact to one or more of the plurality of operation areas is detected. The communication control unit 25 performs the process of transmitting the control directive signal generated by the CPU 21 to the personal computer 11 for control of the driving of a corresponding electric drive mechanism. In addition, the CPU 21 includes the first recognition unit 21a and the second recognition unit 21b realized by hardware or software. The first recognition unit 21a performs the process of recognizing that the input by an external physical contact is continuously performed to the first operation area. The second recognition unit 21b performs the process of recognizing the difference between the start-of-input position in which the input is first detected and the end-of-input position in which the input is last detected when the input by an external physical contact is continuously performed to the second operation area other than the first operation area in the display area of the touch panel 27 so far as the first recognition unit 21a recognizes the continuous input to the first operation area. When the difference is recognized by the second recognition unit 21b, the CPU 21 performs the process of generating a control directive signal for control of the driving of a corresponding electric drive mechanism based on the difference.

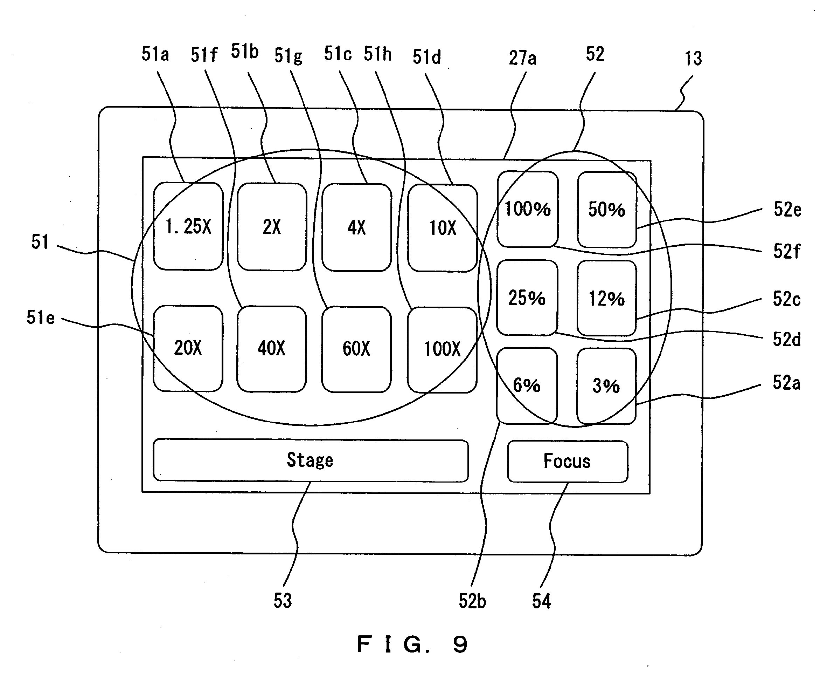

FIG. 9 is an example of a plurality of operation areas set in the display area of the touch panel 27 also functioning as the display screen of the microscope controller 13 according to the present embodiment. The plurality of operation areas are set by the CPU 21 according to the setting information stored in the non-volatile memory 24 as in the embodiment 1.

As illustrated in FIG. 9, a plurality of operation areas are set in the display area 27a of the touch panel 27. An operation area 51 (51a, 51b, 51c, 51d, 51e, 51f, 51g, and 51h) not to be understood as first operation area or second operation area in the sense of claim 1 is to select and switch the objective 6 to be inserted into the optical path, and the operation areas 51a, 51b, 51c, 51d, 51e, 51f, 51g, and 51h respectively correspond to 1.25×, 2×, 4×, 10×, 20×, 40×, 60×, and 100× objectives 6. An operation area 52 (52a, 52b, 52c, 52d, 52e, and 52f) not to be understood as first operation area or second operation area in the sense of claim 1 is to select and switch an attenuation filter to be inserted into an optical path. The operation areas 52a, 52b, 52c, 52d, 52e, and 52f respectively correspond to 3%, 6%, 12%, 25%, 50%, and 100% attenuation filters. An operation area 53 is an area for effectuating the area other than the operation area 53 in the display area 27a of the touch panel 27 as area for moving the stage 2 in the X-axis direction and/or the Y-axis direction. An operation area 54 is an area for effectuating the area other than the operation area 54 in the display area 27a of the touch panel 27 as area for moving the stage 2 in the Z-axis direction. In the present embodiment, when the first operation area is the operation area 53, the second operation area is the area other than the operation area 53 in the display area 27a of the touch panel 27. If the first operation area is the operation area 54, the second operation area is the area other than the operation area 54 in the display area 27a of the touch panel 27.

The user can control the driving of each electric drive mechanism by performing the operation on the plurality of operation areas set in the display area 27a of the touch panel 27.

For example, when the user performs an operation of pressing any of the operation areas 51a, 51b, 51c, 51d, 51e, 51f, 51g, and 51h with a finger (operation as illustrated in FIG. 4A), the objective 6 corresponding to the operated operation area 51 is inserted into the optical path, and the magnification is changed. In this case, when the operation is performed in the operation area 51a corresponding to the 1.25x objective 6, the objective 6 inserted into the optical path is switch to the 1.25x objective 6. Similarly, when the operation is performed in the remaining operation areas 51b, 51c, 51d, 51e, 51f, 51g, and 51h, the objective 6 is switched. Thus, the user can observe the sample S in desired size.

Furthermore, for example, when the user performs an operation of pressing any of the operation areas 52a, 52b, 52c, 52d, 52e, and 52f with a finger (operation as illustrated in FIG. 4A), the attenuation filter corresponding to the operated operation area 52 is inserted into the optical path, and the intensity of the illumination light illuminating the sample S is changed. In this case, when the operation is performed in the operation area 52a corresponding to the 3% attenuation filter, the attenuation filter inserted into the optical path is switched to the 3% attenuation filter. Similarly, when the operation is performed in the remaining operation areas 52b, 52c, 52d, 52e, and 52f, the attenuation filter is switched. Thus, the user can observe the sample S in desired luminosity.

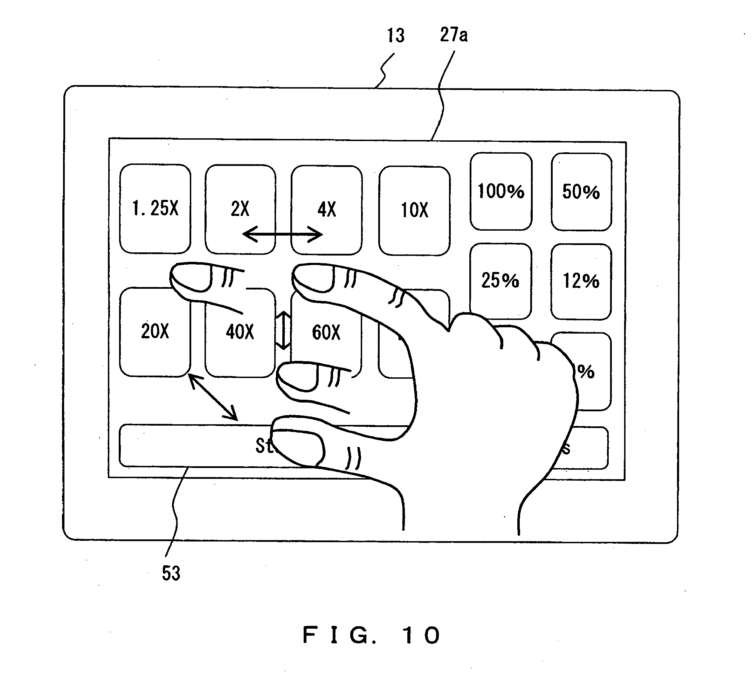

For example, as illustrated in FIG. 10, when the user performs the operation of tracing the area other than the operation area 53 (area in the display area 27a of the touch panel 27 and other than the operation area 53) with the forefinger (as illustrated in FIG. 4B) while continuing the operation of touching the operation area 53 with the thumb, the stage 2 is moved in the X-axis direction and/or the Y-axis direction depending on the tracing operation in the area other than the operation area 53 so far as the touching operation in the operation area 53 continues. The area other than the operation area 53 is valid as an area in which the stage 2 is moved in the X-axis direction and/or the Y-axis direction so far as the touching operation in the operation area 53 continues. Furthermore, when one tracing operation is performed in the valid area other than the operation area 53, the stage 2 is moved in the X-axis direction and/or the Y-axis direction for the corresponding amount based on the difference between the starting position and the ending position of the tracing operation. Thus, the user can move the observation position of the sample S to a desired position. In addition, the user only has to perform the tracing operation with the forefinger in the area other than the operation area 53 while touching the operation area 53 with the thumb to move the observation position to a desired position. Accordingly, there is no possibility of an erroneous operation although the tracing operation is repeatedly performed by an operation without visual confirmation. Therefore, the user can perform the tracing operation through the eyepiece 9 or by checking the monitor 12 when the observation position of the sample S is searched for.

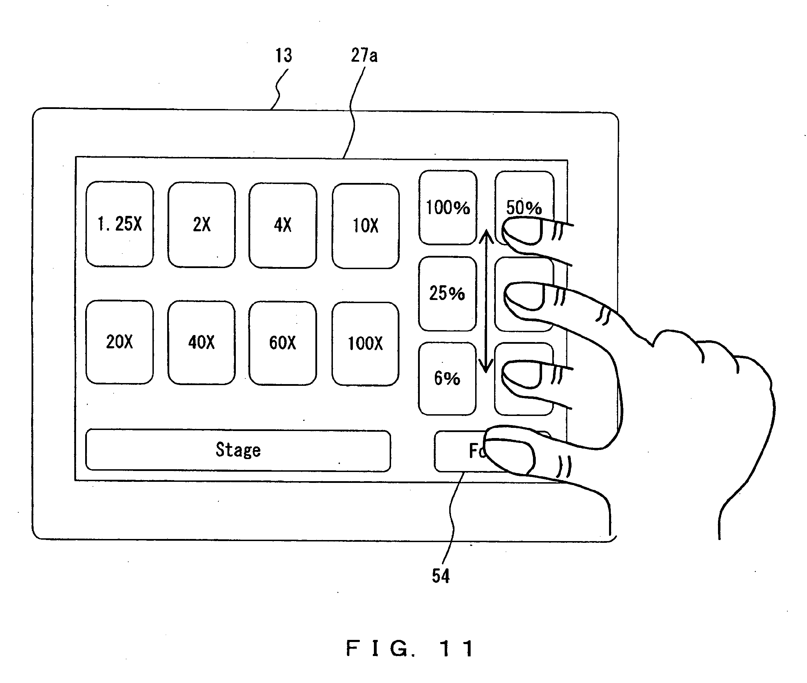

In addition, for example, when the user performs the tracing operation (as illustrated in FIG. 4B) with the forefinger in the area (in the display area 27a of the touch panel 27 and other than the operation area 54) other than the operation area 54 while continuing the operation of touching the operation area 54 with the thumb as illustrated in FIG. 11, the stage 2 is moved in the Z-axis direction depending on the tracing operation in the area other than the operation area 54 so far as the touching operation continues in the operation area 54. The area other than the operation area 54 is effectuated as an area for moving the stage 2 in the Z-axis direction so far as the touching operation continues in the operation area 54. When one tracing operation is performed in the valid area other than the operation area 54, the stage 2 is moved in the Z-axis direction by the corresponding amount based on the difference between the stating position and the ending position of the tracing operation. Thus, the user can perform focusing on the sample S, and observe an image in focus. Furthermore, since the user only has to perform the tracing operation with the forefinger in the area other than the operation area 54 while touching the operation area 54 with the thumb during focusing, there is no possibility of an erroneous operation although the tracing operation is repeatedly performed by the operation without visual confirmation. Therefore, the user can perform the tracing operation through the eyepiece 9 or by checking the monitor 12 when performing focusing on the sample S.

As described above, according to the present embodiment, although the operation without visual confirmation is forcibly performed on the touch panel 27 as in the case where an observation position is searched for and an operation is performed for focusing, for example, the tracing operation with the forefinger is performed with the thumb fixed and the tracing operation with the forefinger is performed in a large area other than the operation area in which the thumb is fixed. Accordingly, there is no possibility of an erroneous operation. In addition, since the operation area for effectuating an area in which the stage 2 is moved can be arranged at any position in the display area 27a of the touch panel 27, the arrangement can be flexibly made without limiting the location. Therefore, when there is an increasing number of operation areas for similar operations (for example, the operation area 42 illustrated in FIG. 7), the arrangement can be easily made.

Furthermore, in the present embodiment, it is not necessary to arrange in advance the operation area 33 in which the stage 2 is moved in the X-axis direction and/or the Y-axis direction and the operation area 35 (refer to FIG. 3) in which the stage 2 is moved in the Z-axis direction as described with reference to the embodiment 1. Therefore, as with the operation areas 51 and 52, other operation areas can be enlarged or increased in number, thereby improving the operability.

### [Embodiment 3]

The microscope system according to the embodiment 3 of the present invention is the same as the microscope system according to the embodiment 2 in configuration, but parts of the processes are different between them. Accordingly, in the descriptions of the present embodiment, the different parts of the processes are mainly explained below.

In the microscope system according to the present embodiment, the following process is performed in the microscope controller 13. The CPU 21 performs the process of setting a plurality of operation areas including at least a first operation area as the plurality of operation areas in which the operation for control of each driving of a plurality of electric drive mechanisms in the display area of the touch panel 27 is performed. The CPU 21 performs the process of generating a control directive signal for control of the driving of a corresponding electric drive mechanism when the input by an external physical contact to one or more of the plurality of operation areas is detected. The communication control unit 25 performs the process of transmitting the control directive signal generated by the CPU 21 to the personal computer 11 for control of the driving of a corresponding electric drive mechanism. In addition, the CPU 21 includes the first recognition unit 21a and the second recognition unit 21b realized by hardware or software. The first recognition unit 21a performs the process of recognizing that the input by an external physical contact is continuously performed to the first operation area. The second recognition unit 21b performs the process of recognizing the difference between the start-of-input position in which the input is first detected and the end-of-input position in which the input is last detected when the input by an external physical contact is continuously performed to the second operation area newly provided in an area other than the first operation area in the display area of the touch panel 27 so far as the first recognition unit 21a recognizes the continuous input to the first operation area. When the difference is recognized by the second recognition unit 21b, the CPU 21 performs the process of generating a control directive signal for control of the driving of a corresponding electric drive mechanism based on the difference.

In the present embodiment, the plurality of operation areas first set in the display area of the touch panel 27 which is also the display screen of the microscope controller 13 are the same as that illustrated in FIG. 9 with reference to the embodiment 2. In the present embodiment, the first operation area is the operation area 53 or the area 54 illustrated in FIG. 9. When the first operation area is the operation area 53, the second operation area is an operation area 61 described later.

The user can control the driving of each electric drive mechanism by performing the operation in the plurality of operation areas set in the display area of the touch panel 27.

For example, when the user performs the operation of touching the operation area 53 (refer to FIG. 9) with the thumb, the operation area 61 is newly provided in the area other than the operation area 53 in the display area 27a of the touch panel 27. In this case, the operation area 61 is provided near the operation area 53. When the user performs the operation of tracing the newly provided operation area 61 with the forefinger (operation illustrated in FIG. 4B) while continuing the operation of touching the operation area 53 with the thumb, the stage 2 is moved in the X-axis direction and/or the Y-axis direction depending on the operation of tracing the operation area 61 so far as the operation of touching the operation area 53 continues. The operation area 61 is provided so far as the operation of touching the operation area 53 continues, and when the touching operation stops (when the thumb is detached from the operation area 53) the original state illustrated in FIG. 9 is restored. When one tracing operation is performed in the operation area 61, the stage 2 is moved in the X-axis direction and/or the Y-axis direction by the corresponding amount based on the difference between the starting position and the ending position of the tracing operation. Thus, the user can move the observation position of the sample S to a desired position. In addition, since the user only has to perform the operation of tracing the operation area 61 with the forefinger while touching the operation area 53 with the thumb to move the observation position to a desired position, the tracing operation with the forefinger can be performed with the thumb fixed. Therefore, although the tracing operation is repeatedly performed by the operation without visual confirmation, the tracing operation does not deviate from the operation area 61 unlike the conventional tracing operation with the forefinger only (refer to FIG. 13), and there is no possibility of an erroneous operation. Therefore, the user can perform the operation of tracing the operation area 61 through the eyepiece 9 or by checking the monitor 12 when the observation position of the sample S is searched for.

In addition, for example, when the user performs the operation of touching the operation area 54 (refer to FIG. 9) with the thumb, a new operation area is similarly provided in an area other than the operation area 54 in the display area 27a of the touch panel 27 although not illustrated in the attached drawings. In this case, the newly provided operation area is positioned near the operation area 54. When the user performs the operation of tracing the newly provided operation area with the forefinger (operation as illustrated in FIG. 4B) while continuing the operation of touching the operation area 54 with the thumb, the stage 2 is moved in the Z-axis direction depending on the operation of tracing the newly provided operation area so far as the touching operation in the operation area 54 continues. The newly provided operation area is provided so far as the operation of touching the operation area 54 continues, and when the touching operation stops (when the thumb is detached from the operation area 54), the original state illustrated in FIG. 9 is restored. When one tracing operation is performed in the newly provided operation area, the stage 2 is moved in the Z-axis direction by the corresponding amount based on the difference between the starting position and the ending position of the tracing operation. Thus, the user can perform focusing on the sample S, and observe an image in focus. Furthermore, since the user only has to perform the operation of tracing the newly provided operation area with the forefinger while touching the operation area 54 with the thumb during the focusing, the tracing operation with the forefinger can be performed with the thumb fixed. Therefore, although the tracing operation is repeatedly performed by the operation without visual confirmation, the tracing operation does not deviate from the newly provided operation area unlike the conventional tracing operation with the forefinger only, and there is no possibility of an erroneous operation. Accordingly, when the user performs the focusing on the sample S, the user can perform the operation of tracing the newly provided operation area through the eyepiece 9 or by checking the monitor 12.

As described above, according to the present embodiment, a new operation area can be provided as necessary in addition to the available effects basically similar to those according to the embodiment 2. Thus, the operation areas are clearly indicated, and a beginner or a user who does not frequently use the system can easily operate the system with improved operability.

Described above are the embodiments of the present invention, but the present invention is not limited to each of the above-mentioned embodiments, and can be improved and varied within the scope of the gist of the present invention.

For example, in each of the above-mentioned embodiments, the processes described with reference to other embodiments can be combined for use. In this case, as described with reference to FIG. 7 in the embodiment 1, the configuration can be made so that the operation of controlling the driving of the zoom mechanism can be performed in other embodiments. However, in this case, the configuration is configured so that the operation can be performed in the operation similar to that performed during focusing. In addition, as described with reference to FIG. 8 in the embodiment 1, the configuration can be made so that the stage 2 can be moved selectively by a small movement or a coarse movement.

Furthermore, for example, in each embodiment, the position, size, and shape of the first operation area set in the display area of the touch panel 27 (the operation areas 34 and 36 in FIG. 3, the operation areas 53 and 54 in FIG. 9, etc.) are not limited to those described in each embodiment, but other positions, sizes, and shapes can be available. The positions, sizes, and shapes can also be varied. In this case, the user can optionally change them.

In addition, for example, the first operation area set in the display area of the touch panel 27 can also be configured as physical operation means in each embodiment. In this case, the first operation area can be configured as a physical button etc. as an exterior component of the microscope controller 13 below the display area of the touch panel 27 etc.

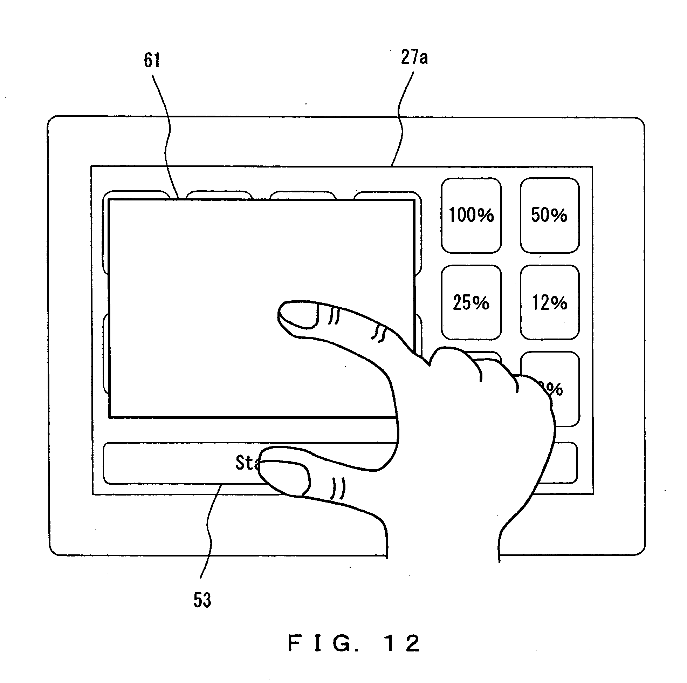

In each embodiment, the second operation area (the operation areas 33 and 35 in FIG. 3, an area other than the operation area 53, an area other than the operation area 54 in FIG. 9, the operation area 61 in FIG. 12, etc.) is effectuated so far as the finger of a user continues touching the first operation area. For example, the second operation area can be switched between the effectuated and the non-effectuated states each time the operation of touching the first operation area (operation in FIG. 4A) is performed. When it is applied to the embodiment 3, the second operation area can be switched between the presence/absence state each time the operation of touching the first operation area is performed. When it is applied to each embodiment, the display of the first operation area can be changed by inverting the color of the first operation area so that the user can visually recognize whether or not the second operation area is valid each time the operation of touching the first operation area with the finger of a user is performed.

Furthermore, in each embodiment, an upright microscope device is used as a microscope device. However, the present invention is not limited to this application, but an inverted microscope device can also be adopted.

In addition, in each embodiment, the electric drive mechanism which can be operated using a touch panel is not limited to the above-mentioned electric drive mechanisms, but other electric drive mechanisms can be combined for use.

According to the present embodiment, an erroneous operation can be avoided when the operation of the touch panel is performed by the operation without visual confirmation with improved operability and flexible arrangements of operation areas.

## Claims

1. A microscope controller in which an operation for control of each driving of a plurality of electric units included in a microscope system is performed, comprising:
a touch panel unit (27) arranged to receive input by an external physical contact and having a display function;
a control unit (21) arranged to set in a display area (27a) of the touch panel unit (27) a plurality of operation areas including at least a first operation area (34, 36) as a plurality of operation areas in which the operation for control of each driving of the plurality of electric units is performed, and arranged to generate a control directive signal for control of the driving of a corresponding electric unit when input by an external physical contact for one or more of the plurality of operation areas is detected; and
a communication control unit (25) arranged to transmit the control directive signal generated by the control unit (21) to an external device for controlling the driving of the corresponding electric unit, wherein the control unit (21) comprises a first recognition unit (21a) arranged to recognize a first continuous input by an external physical contact to the first operation area;
**characterized in that** the control unit (21) further comprises a second recognition unit (21b) arranged to recognize a position difference between a start-of-input position at which a second continuous input is first detected and an end-of-input position at which the second continuous input is last detected as being valid only when the first recognition unit (21a) recognizes the first continuous input to the first operation area, and when the second continuous input by an external physical contact is performed in a second operation area (33, 35) as an area in a display area (27a) of the touch panel unit (27) and an area other than the first operation area (34, 36); wherein the control unit (21) is arranged to generate a control directive signal for control of the driving of the corresponding electric unit based on the position difference when the second recognition unit (21b) recognizes the position difference as being valid.

2. The controller according to claim 1, wherein
the second operation area is arranged to be a newly provided area in an area in a display area of the touch panel unit (27).

3. The controller according to claim 1, wherein:
the first operation area (34, 36) further comprises a plurality of operation areas (34a, 34b, 36a, 36b);
the control unit (21) arranged to generate a control directive signal having a different level for control of an operation of the electric unit depending on which of the plurality of operation areas (34a, 34b, 36a, 36b) included in the first operation area (34, 36) receives the input recognized by the first recognition unit (21a) when the control directive signal for control of the driving of a corresponding electric unit is generated based on a difference recognized by the second recognition unit (21b).

4. The controller according to claim 2, wherein:
the first operation area (34, 36) further comprises a plurality of operation
areas (34a, 34b, 36a, 36b);
the control unit (21) arranged to generate a control directive signal having a different level for control of an operation of the electric unit depending on which of the plurality of operation areas included in the first operation area (34, 36) receives the input recognized by the first recognition unit (21a) when the control directive signal for control of the driving of a corresponding electric unit is generated based on a difference recognized by the second recognition unit (21b).

5. The controller according to claim 1, wherein
a position, size, and shape of the first operation area (34, 36) are variable in a display area (27a) of the touch panel unit (27).

6. The controller according to claim 2, wherein
a position, size, and shape of the first operation area (34, 36) are variable in a display area (27a) of the touch panel unit (27).

7. A microscope system, comprising
the microscope controller according to any of claims 1 to 6.

## Patentansprüche

1. Mikroskop-Steuereinrichtung, in welcher eine Operation zur Steuerung zum jeweiligen Antreiben einer Mehrzahl von elektrischen Einheiten, die in einem Mikroskopsystem enthalten sind, ausgeführt wird, die umfasst:
eine Touchpaneleinheit (27), die dazu eingerichtet ist, eine Eingabe durch einen externen physikalischen Kontakt zu empfangen und die eine Anzeigefunktion hat;
eine Steuereinheit (21), die dazu eingerichtet ist, in einem Anzeigebereich (27a) der Touchpaneleinheit (27) eine Mehrzahl von Operationsbereichen festzulegen, die jeweils einen ersten Operationsbereich (34, 36) als eine Mehrzahl von Operationsbereichen umfassen, in dem die Operation zur Steuerung zum jeweiligen Antreiben der elektrischen Einheiten ausgeführt wird, und die dazu eingerichtet ist ein Steuerungsanweisungssignal zur Steuerung des Antriebs einer entsprechenden elektrischen Einheit zu erzeugen, wenn eine Eingabe durch einen externen physikalischen Kontakt für einen oder mehrere der Mehrzahl von Operationsbereichen erfasst wird; und
eine Kommunikationssteuereinheit (25), die dazu eingerichtet ist, das Steuerungsanweisungssignal, das von der Steuereinheit (21) erzeugt wird, an ein externes Gerät zu übertragen, das zur Steuerung des Antriebs der entsprechenden elektrischen Einheit dient, wobei die Steuereinheit (21) eine erste Erkennungseinheit (21a) umfasst, die dazu eingerichtet ist, eine erste kontinuierliche Eingabe durch einen externen physikalischen Kontakt zu dem ersten Operationsbereich zu erkennen;
**dadurch gekennzeichnet, dass** die Steuereinheit (21) weiterhin eine zweite Erkennungseinheit (21b) umfasst, die dazu eingerichtet ist, eine Positionsdifferenz zwischen einer Eingabestartposition, an der eine zweite kontinuierliche Eingabe zuerst detektiert wird, und einer Eingabeendposition zu erkennen, an der die zweite kontinuierliche Eingabe zuletzt als gültig detektiert worden ist, nur zu erkennen, wenn die erste Erkennungseinheit (21a) die erste kontinuierliche Eingabe in den ersten Operationsbereich erkennt und wenn die zweite kontinuierliche Eingabe durch einen externen physikalischen Kontakt in einem zweiten Operationsbereich (33, 35) als einem Bereich in einem Anzeigebereich (27a) der Touchpaneleinheit (27) und einem anderen Bereich als der erste Operationsbereich (34, 36) ausgeführt wird; wobei die Steuereinheit (21) dazu eingerichtet ist, ein Steuerungsanweisungssignal zur Steuerung des Antriebs der entsprechenden elektrischen Einheit, basierend auf der Positionsdifferenz zu erzeugen, wenn die zweite Erkennungseinheit (21b) die Positionsdifferenz als gültig erkennt.

2. Steuerung gemäß Anspruch 1, wobei
der zweite Operationsbereich dazu eingerichtet ist, ein neu bereitgestellter Bereich in einem Bereich in einem Anzeigebereich der Touchpaneleinheit (27) zu sein.

3. Steuerung gemäß Anspruch 1, wobei:
der erste Operationsbereich (34, 36) weiterhin eine Mehrzahl von Operationsbereichen (34a, 34b, 36a, 36b) umfasst;
die Steuereinheit (21), die dazu eingerichtet ist, ein Steuerungsanweisungssignal, das ein unterschiedliches Niveau hat, für die Steuerung eines Betriebs der elektrischen Einheit in Abhängigkeit davon welche der Mehrzahl von Operationsbereichen (34a, 34b, 36a, 36b), die in dem ersten Operationsbereich (34, 36) enthalten sind, die Eingabe durch die erste Erkennungseinheit (21a) zu erzeugen, wenn das Steuerungsanweisungssignal zum Antreiben einer entsprechenden elektrischen Einheit auf der Basis einer von der zweiten Erkennungseinheit (21b) erkannten Differenz erzeugt wird.

4. Steuerung gemäß Anspruch 2, wobei:
der erste Operationsbereich (34, 36) weiterhin eine Mehrzahl von Operationsbereichen (34a, 34b, 36a, 36b) umfasst;
die Steuereinheit (21), die dazu eingerichtet ist, ein Steuerungsanweisungssignal, das ein unterschiedliches Niveau hat, für die Steuerung eines Betriebs der elektrischen Einheit in Abhängigkeit davon welche der Mehrzahl von Operationsbereichen (34a, 34b, 36a, 36b), die in dem ersten Operationsbereich (34, 36) enthalten sind, die Eingabe durch die erste Erkennungseinheit (21a) zu erzeugen, wenn das Steuerungsanweisungssignal zum Antreiben einer entsprechenden elektrischen Einheit auf der Basis einer von der zweiten Erkennungseinheit (21b) erkannten Differenz erzeugt wird.

5. Steuerung gemäß Anspruch 1, wobei
eine Position, eine Größe und eine Form des ersten Operationsbereichs (34, 36) in einem Anzeigebereich (27a) der Touchpaneleinheit (27) variabel sind.

6. Steuerung gemäß Anspruch 2, wobei
eine Position, eine Größe und eine Form des ersten Operationsbereichs (34, 36) in einem Anzeigebereich (27a) der Touchpaneleinheit (27) variabel sind.

7. Mikroskopsystem, welches die Mikroskop-Steuereinrichtung nach einem der Ansprüche 1 bis 6 umfasst.

## Revendications

1. Contrôleur de microscope dans lequel une opération de commande de chaque pilotage d'une pluralité d'unités électriques incluses dans un système de microscope est exécutée, comprenant :
une unité (27) de panneau tactile agencée pour recevoir une entrée par un contact physique externe et ayant une fonction d'affichage ;
une unité (21) de commande agencée pour définir dans une zone (27a) d'affichage de l'unité (27) de panneau tactile une pluralité de zones d'opération incluant au moins une première zone (34, 36) d'opération comme une pluralité de zones d'opération dans lesquelles l'opération de commande de chaque pilotage de la pluralité d'unités électriques est exécutée, et agencée pour générer un signal de directive de commande pour la commande du pilotage d'une unité électrique correspondante lorsqu'une entrée par un contact physique externe pour une ou plusieurs parmi la pluralité de zones d'opération est détectée ; et
une unité (25) de commande de communication agencée pour transmettre le signal de directive de commande généré par l'unité (21) de commande à un dispositif externe pour commander le pilotage de l'unité électrique correspondante, dans lequel l'unité (21) de commande comprend une première unité (21a) de reconnaissance agencée pour reconnaître une première entrée continue par un contact physique externe sur la première zone d'opération ;
**caractérisé en ce que** l'unité (21) de commande comprend en outre une deuxième unité (21b) de reconnaissance agencée pour reconnaître une différence de position entre une position de début d'entrée à laquelle une deuxième entrée continue est détectée en premier et une position de fin d'entrée à laquelle la deuxième entrée continue est détectée en dernier comme étant valide uniquement lorsque la première unité (21a) de reconnaissance reconnaît la première entrée continue sur la première zone d'opération, et lorsque la deuxième entrée continue par un contact physique externe est exécutée dans une deuxième zone (33, 35) d'opération comme une zone dans une zone (27a) d'affichage de l'unité (27) de panneau tactile et une zone autre que la première zone (34, 36) d'opération ; dans lequel l'unité (21) de commande est agencée pour générer un signal de directive de commande pour la commande du pilotage de l'unité électrique correspondante sur la base de la différence de position lorsque la deuxième unité (21b) de reconnaissance reconnaît la différence de position comme étant valide.

2. Contrôleur selon la revendication 1, dans lequel
la deuxième zone d'opération est agencée pour être une zone nouvellement prévue dans une zone dans une zone d'affichage de l'unité (27) de panneau tactile.

3. Contrôleur selon la revendication 1, dans lequel :
la première zone (34, 36) d'opération comprend en outre une pluralité de zones (34a, 34b, 36a, 36b) d'opération ;
l'unité (21) de commande est agencée pour générer un signal de directive de commande ayant un niveau différent pour une commande d'une opération de l'unité électrique en fonction de laquelle parmi la pluralité de zones (34a, 34b, 36a, 36b) d'opération incluses dans la première zone (34, 36) d'opération reçoit l'entrée reconnue par la première unité (21a) de reconnaissance lorsque le signal de directive de commande pour la commande du pilotage d'une unité électrique correspondante est généré sur la base d'une différence reconnue par la deuxième unité (21b) de reconnaissance.

4. Contrôleur selon la revendication 2, dans lequel :
la première zone (34, 36) d'opération comprend en outre une pluralité de zones (34a, 34b, 36a, 36b) d'opération ;
l'unité (21) de commande est agencée pour générer un signal de directive de commande ayant un niveau différent pour une commande d'une opération de l'unité électrique en fonction de laquelle parmi la pluralité de zones d'opération incluses dans la première zone (34, 36) d'opération reçoit l'entrée reconnue par la première unité (21a) de reconnaissance lorsque le signal de directive de commande pour la commande du pilotage d'une unité électrique correspondante est généré sur la base d'une différence reconnue par la deuxième unité (21b) de reconnaissance.

5. Contrôleur selon la revendication 1, dans lequel
une position, une taille et une forme de la première zone (34, 36) d'opération sont variables dans une zone (27a) d'affichage de l'unité (27) de panneau tactile.

6. Contrôleur selon la revendication 2, dans lequel
une position, une taille et une forme de la première zone (34, 36) d'opération sont variables dans une zone (27a) d'affichage de l'unité (27) de panneau tactile.

7. Système de microscope, comprenant :
le contrôleur de microscope selon l'une quelconque des revendications 1 à 6.
